# EUROPÄISCHE PATENTSCHRIFT

(11) **EP 1 346 193 B1**
(45) Veröffentlichungstag und Bekanntmachung des Hinweises auf die Patenterteilung: **21.02.2018**
(21) Anmeldenummer: 01997677.8
(22) Anmeldetag: 20.11.2001
(51) Int. Cl.: G01C 21/36

(54) **VERFAHREN UND ANORDNUNG ZUR EINGABE VON DATEN IN EIN FAHRZEUGNAVIGATIONSGERÄT**
METHOD AND ARRANGEMENT FOR ENTERING DATA INTO A VEHICLE NAVIGATION SYSTEM
PROCEDE ET AGENCEMENT DE SAISIE DE DONNEES DANS UN SYSTEME DE NAVIGATION AUTOMOBILE

(30) Priorität: 22.11.2000 DE 10057800
(43) Veröffentlichungstag der Anmeldung: 24.09.2003
(73) Patentinhaber: ROBERT BOSCH GMBH, 70442 Stuttgart (DE)
(72) Erfinder: WURST, Klaus, 70771 Leinfelden-Echterdingen (DE)
(86) Internationale Anmeldenummer: PCT/DE2001/004355
(87) Internationale Veröffentlichungsnummer: WO 2002/042718

(56) Entgegenhaltungen:
- EP-A2- 0 684 592
- DE-A- 19 531 415
- DE-A- 19 733 179
- DE-A- 19 854 126

## Beschreibung

### Stand der Technik

Die Erfindung geht von einem Verfahren zur Eingabe von Daten in ein Fahrzeugnavigationsgerät nach der Gattung des unabhängigen Patentanspruchs aus.

Fahrzeugnavigationsgeräte, wie beispielsweise von Firma Blaupunkt-Werke GmbH, Hildesheim, DE vertrieben und im Prospekt "Mobile Kommunikation 2000. www.Blaupunkt.de" anhand der Geräte "TravelPilot DX-N" und "TravelPilot RNS 150" beschrieben, leiten einen Fahrzeugführer entlang einer aufgrund einer gespeicherten Kartendatenbasis berechneten Fahrtroute von einem aktuellen Fahrzeugstandort zu einem Zielort. Hierzu ist es zunächst erforderlich, den Zielort über eine Benutzerschnittstelle des Navigationsgeräts einzugeben. Dies erfolgt gewöhnlich durch buchstabenweise Eingabe zumindest des Zielortnamens und eines Straßennamens, wobei die einzelnen Buchstaben aus einer Buchstabenliste auszuwählen sind. Dieses Verfahren zur Zielorteingabe ist zeitaufwendig und wird häufig als lästig empfunden.

Die DE 195 31 415 A1 offenbart eine Einrichtung zur Eingabe, Aufbereitung, Übertragung und Speicherung von Informationen für ein Kraftfahrzeug, welche eine Einheit zur drahtlosen Datenübertragung zu einem Fahrzeug-Informationssystem aufweist, wobei eine hochauflösende Eingabefläche zur Eingabe von alphanumerischen Daten durch Zeichnen vorhanden ist, und außerhalb der Eingabefläche angeordnete Tasten für spezielle Bedienvorgänge vorgesehen sind.

Die DE 198 54 126 A1 offenbart ein Navigationsverfahren und Navigationsgerät für ein Fortbewegungsmittel, zur Navigation von einem Standort zu einem Zielort, wobei Befehle und/oder der Zielort und ggf. der Standort in dem Navigationsgerät eingegeben werden. Hierbei werden zur Eingabe Daten aus einer Speicherkarte eines Autoradios ausgelesen und die ausgelesenen Daten an einen Navigationsprozessor übertragen.

Die DE 197 33 179 A1 offenbart einen Datensendungsempfänger, der so ausgebildet ist, dass er ein Datensendesignal empfangen kann, welches Inhaltsartdaten, Kartendaten, Informationslieferzeitdaten und Inhaltsaktualisierungsdaten zusammen mit Verkehrsinformationsdaten überträgt, welche einen bestimmten Inhalt an Verkehrsinformation angeben.

Die EP 0 684 592 A2 offenbart ein elektronisches Tagebuch zum entfernten Eingeben von Zielinformationen in ein mobiles Navigationsgerät, das in einem Fahrzeug angeordnet ist.

Es sind weiter für einen mobilen Einsatz vorgesehene Kleinrechner, kurz PDA (= personal digital assistant), mit Datenbank-Funktionalität bekannt, mit denen Adressdateien und beispielsweise ein persönlicher Terminkalender des Benutzers verwaltet werden können. Aktuelle Geräte verfügen vielfach über eine Infrarot-Schnittstelle und können über diese sowohl mit PCs, z. B. zum Herunterladen einer Adreßdatei oder eines Terminkalenders, als auch mit anderen PDAs zum Austausch beispielsweise von üblicherweise auf Visitenkarten aufgedruckten Daten, wie insbesondere Namen- und Adreßdaten, kommunizieren.

### Vorteile der Erfindung

Das erfindungsgemäße Verfahren mit den Merkmalen des unabhängigen Patentanspruchs ermöglicht in vorteilhafter Weise eine vereinfachte Eingabe von Daten in ein Fahrzeugnavigationsgerät durch Übertragung in für mobilen Einsatz vorgesehenen Kleinrechnern gespeicherter Daten, wie insbesondere von Adreßdaten zur Eingabe von Navigationszielorten.

Hierzu werden die Daten nach Maßgabe einer Eingabe über eine Benutzerschnittstelle aus einem Speicher einer solchen elektronischen Datenbank ausgewählt und über eine Luftschnittstelle an das Fahrzeugnavigationsgerät übertragen.

Zur Realisierung der Erfindung kann vorteilhafter Weise weitestgehend auf vorhandene Geräte zurückgegriffen werden. So existieren, wie beim Stand der Technik beschrieben, mobile Kleinrechner, die untereinander über eine Infrarot-Schnittstelle Namen- und Adreßdaten austauschen können. Demzufolge ist der Datenbestand seitens der Kleinrechner auf einfache Weise über die Infrarot-Schnittstelle aktualisier- oder ausbaubar. Desweiteren sind bei geeigneter Auslegung oder Modifizierung der Gerätesoftware beliebig auswählbare Datensätze über die Infrarot-Schnittstelle an das Fahrzeugnavigationsgerät übertragbar. Auf Seiten vorhandener Navigationsgeräte ist, sofern nicht ohnehin schon beispielsweise für eine Fernbedienung vorhanden, eine Infrarot-Schnittstelle vorzusehen. Weiterhin ist eine Gerätesoftware derart anzupassen, dass über die Infrarot-Schnittstelle empfangene Daten in geeigneter Weise, im Falle empfangener Adreßdaten beispielsweise als Navigationsziel, interpretiert werden können.

Zur Eingabe von Daten in ein Fahrzeugnavigationsgerät kann somit in vorteilhafter Weise auf einen für anderweitige Zwecke ohnehin vorhandenen Datenbestand zurückgegriffen werden. Eine erneute Eingabe der für andere Zwecke, beispielsweise eine Adreßdatei, vorhandenen Daten erübrigt sich damit.

Für den Fall für anderweitige Zwecke im Kleincomputer noch nicht vorhandener Daten kann vorteilhafter Weise auf eine Benutzerschnittstelle des Kleincomputers zur Dateneingabe durch den Benutzer, vorzugsweise in Form einer alphanumerischen Tastatur, zurückgegriffen werden. Diese ist gewöhnlich benutzerfreundlicher ausgestaltet, als diejenige bestehender Navigationsgeräte, Letztere werden gewöhnlich in eine Armaturentafel des Kraftfahrzeugs eingebaut, der für Bedienelemente verfügbare Raum ist daher regelmäßig begrenzt. Alternativ kann, rechtzeitige Kenntnis der potentiell in das Fahrzeugnavigationsgerät einzugebenden Daten vorausgesetzt, die Dateneingabe in den Kleincomputer über die Tastatur eines PCs mit entsprechender Infrarot-Schnittstelle oder durch Herunterladen aus einer Datenbank des PCs erfolgen.

Vorteilhafte Ausführungsformen und Weiterbildungen der Erfindung sind in den abhängigen Ansprüchen angegeben.

Von besonderem Vorteil ist es, wenn die Eingabe über die Benutzerschnittstelle Informationen umfaßt, denen im Speicher vorhandene Daten eindeutig zuordenbar sind. Diese Informationen können beispielsweise eine einem Datensatz fest zugeordnete Datensatznummer enthalten, die beispielsweise über eine numerische Tastatur des Kleinrechners oder durch Auswahl aus einer Liste, aus der vorzugsweise die Zuordnung der Datensatznummer zum Datensatzinhalt ersichtlich ist, abrufbar ist.

Im Falle einer mittels des Kleincomputers verwalteten Adreßdatenbank können zur Auswahl von Daten aus dem Speicher des Kleincomputers beispielsweise Namen von Personen oder Institutionen eingegeben werden. Mittels beschriebener Kleinrechner verwaltete Adreßdatenbanken verfügen gewöhnlich über Namen von Personen oder Institutionen, wie Firmen oder Behörden, und zugeordnete Adreßdaten, vorzugsweise in Form eines Straßennamens, einer Hausnummer, einer Postleitzahl und eines Ortsnamens, wie diese von gedruckten Visitenkarten bekannt sind. Durch Eingabe eines solchen Namens sind somit auf einfache Weise beispielsweise dem Namen zugeordnete Adreßdaten als Navigationsziel aus dem Speicher auslesbar. Die Adreßdaten umfassen dabei in vorteilhafter Weise alle zur präzisen Navigationszieleingabe erforderlichen Informationen.

Im Falle eines mittels des Kleincomputers verwalteten persönlichen Terminkalenders besteht eine vorteilhafte Möglichkeit zur Auswahl im Speicher abgelegter Informationen im Aufruf eines im Terminkalender gespeicherten Termins. Gewöhnlich bestehen Einträge mittels elektronischer Terminplaner zu verwaltender Termine aus einem Datum, einer Uhrzeit, einem für den Benutzer selbsterklärenden Stichwort oder Namen und einem Ort, an dem der Termin wahrzunehmen ist. Durch Aufruf eines in einem Terminplaner gespeicherten Termins kann der zugehörige Datensatz ausgewählt und an das Fahrzeugnavigationsgerät übertragen werden. Hierzu kann es vorteilhaft sein, den benutzerseitigen Termineintrag automatisch durch in der Adreßdatei vorhandene Daten, insbesondere Adreßdaten, zu ergänzen. Zur Verringerung des PDA-seitigen Speicherplatzbedarfs kann diese Adreßzuordnung vorteilhafterweise erst bei Aufruf des Termins vorgesehen sein. Eine weitere Möglichkeit zur Dateneingabe besteht in der Eingabe eines für den Benutzer einprägsamen Spitznamens oder einer Abkürzung, wenn diese Information im Speicher des Kleinrechners zur Kennzeichnung eines Datensatzes einer Adreßdatei oder einem Termineintrag eines Terminkalenders zugeordnet sind. Beispielsweise kann zum Abruf der Firmenanschrift der Anmelderin vorteilhafter Weise die Abkürzung "Bosch" anstelle des vollen Firmennamens "Robert Bosch GmbH" eingegeben werden.

Eine weitere Vereinfachung der Eingabe ergibt sich dadurch, dass im Speicher des Kleinrechners den Daten zugeordnete, zur Auswahl der Daten über die Benutzerschnittstelle eingebbare Informationen, vorzugsweise in Form einer Liste, zur Auswahl durch den Benutzer angeboten werden. Hierdurch werden dem Benutzer die im Speicher vorhandenen Datensätze zur Kenntnis gebracht, so dass er im Fall einer Übereinstimmung eines vorhandenen mit dem gewünschten Datensatz diesen aus der Menge der vorhandenen Datensätze auswählen kann. Eine erneute Eingabe der Daten kann in diesem Fall entfallen. Weiter bietet dies den Vorteil, dass dem Benutzer die zum Abruf bestimmter Datensätze einzugebenden Informationen zur Kenntnis gebracht werden. Dies ist insbesondere im Zusammenhang mit benutzerdefinierten Bezeichnungen, wie Abkürzungen für Namen, von Bedeutung, die dem Benutzer nach längerer Zeit möglicherweise nicht mehr im Gedächtnis präsent sind.

Das erfindungsgemäße Verfahren ist besonders vorteilhaft zur Eingabe eines Navigationsziels in ein Fahrzeugnavigationsgerät verwendbar, da Adreßdateien in der Regel vollständige Anschriften von Personen oder Institutionen und damit die zur Navigationszieleingabe erforderlichen Informationen enthalten.

Weiter kann es von Vorteil sein, wenn im Speicher des Kleinrechners alternativ oder ergänzend zu Adreßdaten weitere Informationen in Form einer Wegbeschreibung, beispielsweise zu einem Firmenstandort, wie dem der Anmelderin, enthalten sind. Eine solche Wegbeschreibung kann vorteilhaft als Teilroute innerhalb einer Routenplanung des Fahrzeugnavigationsgeräts einbezogen werden.

### Zeichnungen

Ausführungsbeispiele der Erfindung sind in der Figur dargestellt und werden nachfolgend näher erläutert.

Die Figur zeigt ein Blockschaltbild des erfindungswesentlichen Teils eines Fahrzeugnavigationsgeräts 1, dem Informationen über einen Navigationszielort von einer mobilen elektronischen Datenbank 2 über eine Luftschnittstelle zugeführt werden.

### Beschreibung der Ausführungsbeispiele

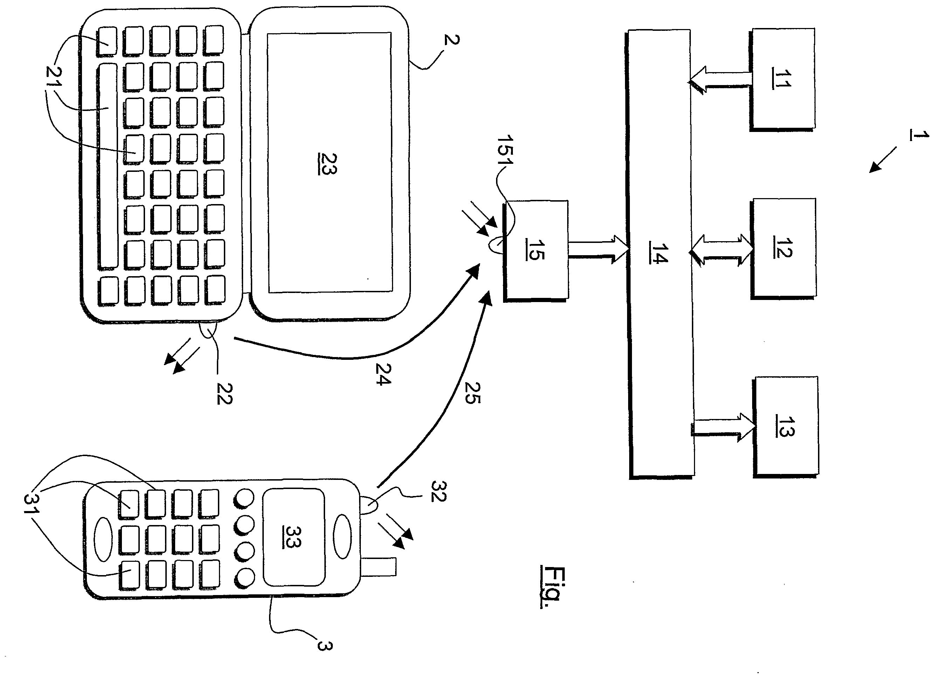

In Figur 1 ist ein Fahrzeugnavigationsgerät 1 zur Durchführung des erfindungsgemäßen Dateneingabeverfahrens dargestellt.

Das Fahrzeugnavigationsgerät 1 verfügt über eine zentrale Gerätesteuerung 14, die nach Maßgabe eines gespeicherten Betriebsprogramms die verschiedenen Funktionen des Fahrzeugnavigationsgeräts steuert.

An die Gerätesteuerung 14 ist eine Bedieneinrichtung 11 angeschlossen. Diese umfaßt Bedienelemente, beispielsweise in Form eines Drehknopfes zur Steuerung eines Cursors innerhalb eines auf einem Display als Teil einer Ausgabevorrichtung 13 des Geräts angezeigten Auswahlliste und einer Bestätigungstaste zur Auswahl eines mittels der Cursorsteuerung angewählten Listeneintrags. Ein solcher auswählbarer Listeneintrag kann in bekannter Weise sowohl ein Buchstabe aus einer Liste im Rahmen einer Zielorteingabe, die Auswahl eines Zielortes aus einer Zielortliste im Rahmen einer Zielorteingabe, oder auch die Auswahl eines Befehls aus einer Befehlliste zur Steuerung des Fahrzeugnavigationsgeräts 1 sein.

An die Gerätesteuerung 14 ist weiterhin eine Ausgabeeinrichtung 13, die vorzugsweise in Form eines Displays und einer akustischen Ausgabeeinrichtung ausgeführt ist, angeschlossen. Die Ausgabeeinrichtung 13 dient unter anderem der Anzeige einer Zielortliste im Rahmen einer Navigationszielorteingabe, desweiteren der Ausgabe von Fahrhinweisen zur Leitung eines Fahrzeugführers entlang einer berechneten Fahrtroute. Die Ausgabe der Fahrhinweise erfolgt vorzugsweise in Form eines Richtungspfeils und einer Restentfernungsanzeige über das Display sowie ergänzend in Form akustischer Fahrhinweise, wie beispielsweise "nach 100 m bitte rechts abbiegen".

An die Gerätesteuerung 14 ist weiterhin eine Kartendatenbasis 12 angeschlossen, die vorzugsweise in Form eines CD-ROM-Lesegeräts mit darin eingelegter Daten-CD ausgeführt ist. Die Kartendatenbasis umfaßt Ortskoordinaten, den Ortskoordinaten zugeordnete Orts- und Straßennamen, gemäss einer vorteilhaften Weiterbildung zusätzlich auch den Ortskoordinaten zugeordnete Postleitzahlen sowie Informationen über die Ortskoordinaten beziehungsweise durch diese repräsentierte Orte verbindende Verkehrswege. Die Gerätesteuerung 14 berechnet nach Eingabe eines Navigationszielorts, der auch in der Kartendatenbasis 12 enthalten ist, unter Zuhilfenahme der Verkehrswegeinformationen der Kartendatenbasis 12 eine Fahrtroute vom aktuellen Fahrzeugstandort zu dem eingegebenen Navigationszielort. Die Informationen über den aktuellen Fahrzeugstandort erhält die Gerätesteuerung 14 über ein in der Figur nicht dargestelltes Ortungssystem, welches beispielsweise Signale von GPS-Satelliten zur Ortsbestimmung nutzt. Nach Berechnung der Fahrtroute führt das Fahrzeugnavigationssystem durch Ausgabe von standortabhängigen Fahrthinweisen über die Ausgabevorrichtung 13 den Fahrzeugführer entlang der berechneten Fahrtroute.

Das Fahrzeugnavigationssystem ist zur Durchführung des erfindungsgemäßen Eingabeverfahrens mit einer Schnittstelle 15 zur drahtlosen Navigationszielorteingabe ausgestattet. Die Schnittstelle 15 verfügt über einen Infrarotempfänger 151, über den Informationen über einen Navigationszielort drahtlos in das Fahrzeugnavigationssystem vermittels der Schnittstelle 15 eingebbar sind.

Figur 1 zeigt weiterhin einen für einen mobilen Einsatz vorgesehenen elektronischen Kleinrechner 2, wie diese gemeinhin auch unter der Bezeichnung PDA (= personal digital assistant) bekannt sind. Der Kleinrechner 2 verfügt über eine Eingabevorrichtung 21 in Form einer vorzugsweise alphanumerischen Tastatur und ein Display 23 zur Unterstützung über die Tastatur 21 eingegebener Informationen und zur Darstellung aus einem Speicher des Kleinrechners ausgelesener Informationen.

Das PDA 2 ist im vorliegenden Fall als mobile elektronische Adreßdatenbank ausgelegt, wobei im Speicher des PDA jeweils einem Namen einer natürlichen Person, einer juristischen Person, wie z. B. einem Firmennamen, oder einem benutzerdefinierten Spitznamen für eine natürliche oder juristische Person jeweils ein Adreßeintrag zugeordnet ist. Der einem Namen zugeordnete Adreßeintrag umfaßt vorteilhafter Weise einen Straßennamen, eine Hausnummer, eine Postleitzahl und einen Ortsnamen, also solche Informationen, die üblicher Weise auf Visitenkarten aufgedruckt sind und die zur Beschreibung eines Navigationszielorts und damit zur Navigationszielorteingabe in ein Fahrzeugnavigationsgerät ausreichen.

Vorteilhafter Weise können weiterhin einem Namenseintrag eine Wegbeschreibung von einem leicht zu findenden Ausgangspunkt, wie beispielsweise einer Autobahnausfahrt, zur abgespeicherten Adresse abgelegt sein. Beispielsweise kann in der Datenbank unter dem Namen "Bosch, Feuerbach" die Anschrift des Standortes Feuerbach der Anmelderin, nämlich Wernerstr. 1, 70469 Stuttgart, DE sowie eine Wegbeschreibung, beispielsweise beginnend mit der Autobahnausfahrt Feuerbach an der Autobahn 81 über die Bundesstraße 295 Richtung Feuerbach bis zur Einmündung Wernerstraße, von dort nach links über die Wernerstraße Richtung Zuffenhausen, von der Wernerstraße links abbiegend zum Tor 1 des Werks Feuerbach, das die Besucheranschrift des Standorts Feuerbach darstellt, abgespeichert sein. Ebenso sind zu weiteren Namenseinträgen zugehörige Adreßinformationen und gegebenenfalls Wegbeschreibungen im Speicher des PDA abgespeichert.

Das PDA verfügt erfindungsgemäß über eine Infrarotschnittstelle 22, über die Namen- und Adreßdaten mit über kompatible Schnittstellen verfügenden Geräten austauschbar sind.

Zur erfindungsgemäßen Fahrtzieleingabe in ein Fahrzeugnavigationsgerät wird das beschriebene PDA in die Nähe des Fahrzeugnavigationsgeräts, vorzugsweise in den Fahrzeuginnenraum, in dem das Fahrzeugnavigationsgerät verbaut ist, gebracht. Nach Eingabe eines im Speicher des PDA abgelegten Namens über die Tastatur 21 liest der Prozessor des PDA 2 aus dem Speicher des PDA die dem Namen zugeordnete Adreßinformationen aus und sendet diese über die Infrarotschnittstelle 22 an die Infrarotschnittstelle 151 des Fahrzeugnavigationsgeräts. Vorzugsweise ermöglicht das PDA über sein Display 23 eine visuelle Kontrolle des ausgewählten Datensatzes und sendet die zugehörigen Adreßinformationen erst nach Bestätigung durch den Benutzer an das Navigationsgerät. Auf diese Weise werden die einem Namen zugeordneten Adreßinformationen als Navigationszielort in das Fahrzeugnavigationsgerät 1 übertragen. Die Gerätesteuerung 14 des Fahrzeugnavigationsgeräts 1 vergleicht die über die Infrarotschnittstelle 151 vom PDA 2 empfangenen Adreßinformationen mit in der Kartendatenbasis 12 abgespeicherten Informationen und übernimmt diese als Navigationszielort, sofern die empfangenen Adreßinformationen mit einem Eintrag in der Kartendatenbasis übereinstimmen.

Für den Fall, dass die Gerätesteuerung 14 aufgrund des Vergleichs der empfangenen Adreßinformationen mit gespeicherten Adreßinformationen Mehrdeutigkeiten feststellt, gibt das Fahrzeugnavigationsgerät über die Ausgabeeinrichtung 13 die aufgrund des Vergleichs möglichen Navigationszielorte aus und fordert den Benutzer zur Auswahl eines aus der Mehrzahl der möglichen Navigationszielorte vermittels der Eingabeeinrichtung 11 auf. Anschließend berechnet die Gerätesteuerung 14 des Fahrzeugnavigationsgeräts 1 in an sich bekannter Weise eine Fahrtroute zum eingegebenen Navigationszielort.

Für den Fall, dass neben den Adreßdaten zu einem im Speicher des PDA abgelegten Namens zusätzlich Wegbeschreibungsinformationen verfügbar sind, werden diese ebenfalls über die Luftschnittstelle von der Infrarotdiode 22 des PDA 2 an die Infrarotschnittstelle 151, 15 des Fahrzeugnavigationsgeräts übertragen und durch die Gerätesteuerung 14 des Fahrzeugnavigationsgeräts als Teilroute in die Routenberechnung einbezogen.

Anstelle einer Infrarotübertragung kann in analoger Weise eine Funkübertragung für kurze Entfernungen, wie sie unter dem Schlagwort "Blue Tooth" zunehmend Verbreitung findet, zur Übertragung der Informationen von der Datenbank 2 zum Fahrzeugnavigationsgerät 1 verwendet werden

Zur Abspeicherung der Adreßinformationen zu Namenseinträgen in dem PDA 2 kann in an sich bekannter Weise die Tastatur 21 verwendet werden, darüber hinaus ist es jedoch auch möglich, diese Informationen über einen über eine entsprechende Infrarot- oder Blue Tooth-Schnittstelle verfügenden PC aus dessen Adreßdatenbank in das PDA 2 herunter zu laden.

Eine weitere vorteilhafte Möglichkeit zum Abspeichern von Adreßinformationen im PDA 2 zielt auf eine zunehmend Verbreitung findenden Praxis der Gestalt, dass im Rahmen von Besprechungen Besprechungsteilnehmer ihre PDAs auf einem Sitzungstisch derart plazieren, dass diese untereinander Namen- und zugehörige Adreßinformationen untereinander automatisch austauschen. Somit ist auf einfache Weise der Adreßdatenbestand in einem PDA eines jeden der Teilnehmer ohne großen Aufwand erneuer- beziehungsweise aktualisierbar.

Eine alternative Ausführungsform der Erfindung richtet sich auf einen mobilen Terminplaner, der ebenfalls im PDA 2 realisiert ist. So werden üblicherweise Termineinträge in Verbindung mit einem vom Benutzer gewählten für ihn selbsterklärenden Stichwort, einer Uhrzeit, einem Datum und üblicherweise auch einem Ort, an dem der Termin wahrzunehmen ist, abgespeichert.

Somit kann durch Anwahl eines Termineintrags, beispielsweise durch Eingabe des Stichworts oder auch des Datums und der Uhrzeit automatisch ein zugehöriger Adreßeintrag aufgerufen werden. Ein auf diese Weise aufgerufener Adreßeintrag kann in der beschriebenen Art und Weise als Navigationszielort über die Luftschnittstelle 22, 151 an das Fahrzeugnavigationsgerät 1 übertragen werden. Erforderlichenfalls kann der abgerufene Termineintrag vor der Datenübertragung durch Informationen einer mit dem PDA ebenfalls verwalteten Adreßdatenbank ergänzt werden.

Eine alternative Ausführungsform der Erfindung richtet sich darauf, die in einem Mobilfunktelefon 3 vorhandene Datenbank zur Navigationszielorteingabe zu nutzen. Das Mobilfunktelefon 3 verfügt über eine Tastatur 31 zur Eingabe einer Telefonnummer, darüber hinaus aber auch zur Eingabe von Telefonbucheinträgen in Form eines Namens und einer zugehörigen Telefonnummer. Die Eingabe und der Betriebszustand des Mobilfunktelefons 3 sind über ein Display 33 ablesbar. Durch Auswahl eines Namens aus der Telefonbuchliste des Mobilfunktelefons 3 kann eine zugehörige Telefonnummer ausgewählt werden, und diese über eine Infrarot- beziehungsweise Blue Tooth-Schnittstelle 32 des Mobilfunktelefons 3 an eine entsprechende kompatible Schnittstelle 151, 15 des Fahrzeugnavigationsgeräts 1 übertragen werden.

In der Kartendatenbasis 12 des Fahrzeugnavigationsgeräts 1 sind hierzu vorteilhafter Weise zu in der Kartendatenbasis vorhandenen Adreßeinträgen in Form von Orts- und Straßennamen sowie Hausnummer, Telefonnummern zugeordnet. Eine solche Zuordnung existiert beispielsweise auf kommerziell vertriebenen CD-ROM-Telefonbuchverzeichnissen. Somit ist aufgrund der über die Schnittstelle 15 empfangenen Telefonnummer eine zugehörige Adresse und eine der Adresse zugeordnete Ortskoordinate aus der Kartendatenbasis 12 des Fahrzeugnavigationsgeräts als Navigationszielort auswählbar.

## Patentansprüche

1. Verfahren zur Eingabe eines Zielorts in ein Fahrzeugnavigationsgerät (1), wobei in einer für einen mobilen Einsatz vorgesehenen Datenbank (2), insbesondere Terminplaner, Adressverwaltung oder Mobiltelefon, Datensätze gespeichert sind, die Adressinformationen oder als Adressinformationen interpretierbare Daten enthalten oder denen Adressinformationen oder als Adressinformationen interpretierbare Daten zugeordnet sind, wobei nach Maßgabe einer Eingabe über eine Benutzerschnittstelle ein Datensatz ausgewählt wird, wobei die in dem ausgewählten Datensatz enthaltenen oder diesem zugeordneten Adressinformationen oder als Adressinformationen interpretierbaren Daten über eine Luftschnittstelle (22) an das Fahrzeugnavigationsgerät (1) übertragen werden, wobei die Adressinformationen oder die aus den als Adressinformationen interpretierbaren Daten gewonnenen Adressinformationen als Zielort in das Navigationssystem eingegeben werden, wobei die Daten ferner eine Wegbeschreibung zu einer Adresse umfassen, die als Teilroute zum durch die Adresse bezeichneten Zielort in das Navigationsgerät (1) übertragen wird.

2. Verfahren nach Anspruch 1, dadurch gekenntzeichnet, dass die übertragenen Daten die Wegbeschreibung von einem leicht zu findenden Ausgangspunkt zu der Adresse umfassen.

3. Verfahren nach Anspruch 2, **dadurch gekennzeichnet, dass** die übertragenen Daten die Wegbeschreibung von einer Autobahnausfahrt als den leicht zu findenden Ausgangspunkt umfassen.

4. Verfahren nach einem der vorhergehenden Ansprüche, **dadurch gekennzeichnet, dass** zur Auswahl im Speicher abgelegter Daten vorzugsweise eine der Informationen Name einer Person, Name einer Institution, durch den Benutzer vorgegebene Bezeichnung, insbesondere Abkürzung oder Spitzname eines Namens, oder Termin über die Benutzerschnittstelle eingegeben wird.

5. Verfahren nach einem der vorhergehenden Ansprüche, **dadurch gekennzeichnet, dass** im Speicher der Datenbank den Daten zugeordnete, zur Auswahl der Daten über die Benutzerschnittstelle eingebbare Informationen, vorzugsweise in Form einer Liste, zur Auswahl durch den Benutzer angeboten werden.

6. Anordnung mit einer Benutzerschnittstelle zur Eingabe eines Zielorts in ein Fahrzeugnavigationsgerät (1) und mit einer für einen mobilen Einsatz vorgesehenen Datenbank (2), insbesondere Terminplaner, Adressverwaltung oder Mobiltelefon, in der Datensätze gespeichert sind, die Adressinformationen oder als Adressinformationen interpretierbare Daten enthalten oder denen Adressinformationen oder als Adressinformationen interpretierbare Daten zugeordnet sind, wobei die Anordnung ausgebildet ist, um nach Maßgabe einer Eingabe über die Benutzerschnittstelle einen Datensatz auszuwählen, wobei die Anordnung weiter ausgebildet ist, die in dem ausgewählten Datensatz enthaltenen oder diesem zugeordneten Adressinformationen oder als Adressinformationen interpretierbaren Daten über eine Luftschnittstelle (22) an das Fahrzeugnavigationsgerät (1) zu übertragen, wobei die Anordnung weiter ausgebildet ist, die Adressinformationen oder die aus den als Adressinformationen interpretierbaren Daten gewonnenen Adressinformationen als Zielort in das Fahrzeugnavigationsgerät (1) einzugeben, und wobei die Adressinformationen oder die aus den als Adressinformationen interpretierbaren Daten gewonnenen Adressinformationen ferner eine Wegbeschreibung zu einer Adresse umfassen, die als Teilroute zum durch die Adresse bezeichneten Zielort in das Fahrzeugnavigationsgerät (1) übertragen wird.

## Claims

1. Method for inputting a destination into a vehicle navigation appliance (1), wherein a database (2) provided for mobile use, particularly a scheduler, address manager or mobile phone, stores data records that include address information or data interpretable as address information or that have associated address information or data interpretable as address information, wherein an input via a user interface is taken as a basis for selecting a data record, wherein the address information, or data interpretable as address information, included in the selected data record or associated therewith is transmitted to the vehicle navigation appliance (1) via an air interface (22), wherein the address information or the address information obtained from the data interpretable as address information is input into the navigation system as a destination, wherein the data further comprise a route description to an address that is transmitted to the navigation appliance (1) as a partial route to the destination denoted by the address.

2. Method according to Claim 1, **characterized in that** the transmitted data comprise the route description from an easy-to-find starting point to the address.

3. Method according to Claim 2, **characterized in that** the transmitted data comprise the route description from a motorway exit as the easy-to-find starting point.

4. Method according to one of the preceding claims, **characterized in that** data stored in the memory are selected by inputting via the user interface preferably one of the following pieces of information: name of a person, name of an institution, description prescribed by the user, particularly abbreviation or nickname of a name, or appointment.

5. Method according to one of the preceding claims, **characterized in that** the memory of the database is used to present information associated with the data and inputtable via the user interface for the purpose of selection of the data, preferably in the form of a list, for selection by the user.

6. Arrangement having a user interface for inputting a destination into a vehicle navigation appliance (1) and having a database (2) provided for mobile use, particularly a scheduler, address manager or mobile phone, that stores data records that include address information or data interpretable as address information or that have associated address information or data interpretable as address information, wherein the arrangement is configured to take an input via the user interface as a basis for selecting a data record, wherein the arrangement is further configured to transmit the address information, or data interpretable as address information, included in the selected data record or associated therewith to the vehicle navigation appliance (1) via an air interface (22), wherein the arrangement is further configured to input the address information or the address information obtained from the data interpretable as address information into the vehicle navigation appliance (1) as a destination, and wherein the address information or the address information obtained from the data interpretable as address information further comprises a route description to an address that is transmitted to the vehicle navigation appliance (1) as a partial route to the destination denoted by the address.

## Revendications

1. Procédé de saisie d'une destination dans un dispositif de navigation de véhicule (1), dans lequel des ensembles de données sont stockés dans une base de données (2) prévue pour une utilisation mobile, en particulier un agenda, un carnet d'adresses ou un téléphone mobile, qui contiennent des informations d'adresses ou des données qui peuvent être interprétées comme étant des informations d'adresses ou auxquelles sont associées des informations d'adresses ou des données qui peuvent être interprétées comme étant des informations d'adresses, dans lequel un ensemble de données est sélectionné en fonction d'une saisie effectuée par l'intermédiaire d'une interface utilisateur, dans lequel les informations d'adresses contenues dans l'ensemble de données sélectionné ou associées à celui-ci ou des données qui peuvent être interprétées comme étant des informations d'adresses sont transmises au dispositif de navigation de véhicule (1) par l'intermédiaire d'une interface radio (22), dans lequel les informations d'adresses ou les informations d'adresses obtenues à partir des données qui peuvent être interprétées comme étant des informations d'adresses, sont saisies dans le système de navigation en tant que destination, dans lequel les données comprennent en outre une description d'itinéraire vers une adresse qui est transmise en tant que trajet partiel vers la destination désignée par l'adresse dans le dispositif de navigation (1).

2. Procédé selon la revendication 1, **caractérisé en ce que** les données transmises comprennent la description de l'itinéraire allant d'un point de départ qui peut être facilement trouvé jusqu'à l'adresse.

3. Procédé selon la revendication 2, **caractérisé en ce que** les données transmises comprennent la description de l'itinéraire à partir d'une sortie d'autoroute en tant que point de départ qui peut être facilement trouvé.

4. Procédé selon l'une quelconque des revendications précédentes, **caractérisé en ce que**, pour sélectionner des données stockées dans la mémoire, l'une des informations suivantes est de préférence saisie par l'intermédiaire de l'interface utilisateur, à savoir le nom d'une personne, le nom d'une institution, une désignation prédéfinie par l'utilisateur, en particulier une abréviation ou un surnom d'un nom, ou un rendez-vous.

5. Procédé selon l'une quelconque des revendications précédentes, **caractérisé en ce qu'**il est proposé à l'utilisateur de sélectionner des informations, de préférence sous la forme d'une liste, qui sont associées aux données dans la mémoire de la base de données et qui peuvent être saisies par l'intermédiaire de l'interface utilisateur pour la sélection des données.

6. Dispositif comportant une interface utilisateur pour la saisie d'une destination dans un appareil de navigation de véhicule (1) et une base de données (2) prévue pour une utilisation mobile, en particulier un agenda, un carnet d'adresses ou un téléphone mobile, dans lequel sont enregistrés des ensembles de données contenant des informations d'adresses ou des données qui peuvent être interprétées comme étant des informations d'adresses ou auxquelles sont associées des informations d'adresses ou des données pouvant être interprétées comme étant des informations d'adresses, dans lequel le dispositif est conçu pour sélectionner un ensemble de données en fonction d'une saisie effectuée par l'intermédiaire de l'interface utilisateur, dans lequel le dispositif est en outre conçu pour transmettre les informations d'adresses contenues dans l'ensemble de données sélectionné ou associées à celui-ci ou des données qui peuvent être interprétées comme étant des informations d'adresses, au dispositif de navigation de véhicule (1) par l'intermédiaire d'une interface radio (22), dans lequel le dispositif est en outre conçu pour saisir les informations d'adresses ou les informations d'adresses obtenues à partir des données qui peuvent être interprétées comme étant des informations d'adresses dans le dispositif de navigation de véhicule (1) en tant que destination, et dans lequel les informations d'adresses ou les informations d'adresses obtenues à partir des données qui peuvent être interprétées comme étant des informations d'adresses comprennent en outre une description d'itinéraire vers une adresse qui est transmise en tant que trajet partiel vers la destination désignée par l'adresse dans le dispositif de navigation de véhicule (1).
